Europäisches Patentamt

European Patent Office

Office européen des brevets

(11) Publication number: **0 152 154 B1**

(12) **EUROPEAN PATENT SPECIFICATION**

(45) Date of publication of patent specification: **10.10.90**

(51) Int. Cl.⁵: **A 47 L 15/42**

(21) Application number: **85200178.3**

(22) Date of filing: **12.02.85**

(54) **Automatic dishwashing machine for domestic use with means for producing an oxidising solution of sodium hypochlorite.**

(30) Priority: **16.02.84 IT 1964384**

(43) Date of publication of application:
**21.08.85 Bulletin 85/34**

(45) Publication of the grant of the patent:
**10.10.90 Bulletin 90/41**

(84) Designated Contracting States:
**DE FR GB SE**

(56) References cited:
**EP-A-0 083 739**
**EP-A-0 083 740**
**AT-B- 306 295**
**CH-A- 634 217**
**DE-B-2 501 269**
**US-A-3 756 457**

(73) Proprietor: **WHIRLPOOL INTERNATIONAL B.V.**
**Tarwelaan 58**
**NL-5632 KG Eindhoven (NL)**

(72) Inventor: **Civanelli, Claudio**
**INT. OCTROOIBUREAU B.V. c/o Prof. Holstlaan 6**
**NL-5656 AA Eindhoven (NL)**
Inventor: **Siffrin, Eugen**
**INT. OCTROOIBUREAU B.V. c/o Prof. Holstlaan 6**
**NL-5656 AA Eindhoven (NL)**
Inventor: **Vanetti, Ambrogio**
**INT. OCTROOIBUREAU B.V. c/o Prof. Holstlaan 6**
**NL-5656 AA Eindhoven (NL)**

(74) Representative: **Gorter, Willem Karel et al**
**INTERNATIONAAL OCTROOIBUREAU B.V. Prof.**
**Holstlaan 6**
**NL-5656 AA Eindhoven (NL)**

## Description

The present invention relates to an automatic dishwashing machine for domestic use comprising a washing space, a water reservoir connectable to a water supply by way of an air gap, a container for sodium chloride, a cell for the electrochemical production of sodium hypochlorite and an ion-exchanger for softening the water, the ion exchanger being hydraulically connected to the water supply by a conduct containing the air gap and a valve located downstream of the air gap, the cell being hydraulically connected to the water reservoir via the container, whereby the water reservoir is in permanent communication with the container and the cell is hydraulically connected to the washing space.

Such an automatic dishwashing machine is known from the EP—A—0 083 739 whereby the oxidizing substance generated by the electrochemical cell is gaseous chlorine. In case the oxidizing substance is, however, a liquid such as a hypochlorite solution it is often necessary to locate the electrochemical cell above the highest level reached by the water in the washing space so that the hypochlorite solution can flow by gravity into the washing space. From a constructional point of view it would, however, be more convenient to locate the chemical cell below the washing space where more space is available than in the crowded upper part of the machine.

It is an object of the present invention to provide a dishwashing machine in which by simple means the location of the electrochemical cell is independent of the water level.

The automatic dishwashing machine according to the invention is characterized in that the electrochemical cell is also connected to the water reservoir by a further hydraulic connection through which the cell can be filled with water to a predetermined level which is determined by level-determining means and said further hydraulic connection is controlled by valve means, whereas the electrochemical cell is hydraulically connected to the washing space by way of an ejector, of which the drive fluid is consituted by water from the water supply which has passed through the ion-exchanger.

From the US—A—3 756 457 a dishwashing machine is known whereby ejectors are used for the transportation of liquid additives from independent containers to the dishwashing machine. An ion-exchanger however is not disclosed in this publication and the ejectors are directly driven by water from the main supply line.

The invention will be more apparent from the detailed description of a preferred embodiment given hereinafter by way of non-limiting example with reference to the accompanying drawing, in which:

Figure 1 is a diagrammatic illustration of a dishwashing machine according to the invention;

Figure 2 is a sectional view of this machine comprising the ejector by means of which the sodium hypochlorite solution if fed into the washing environment by the water used in the wash cycle itself.

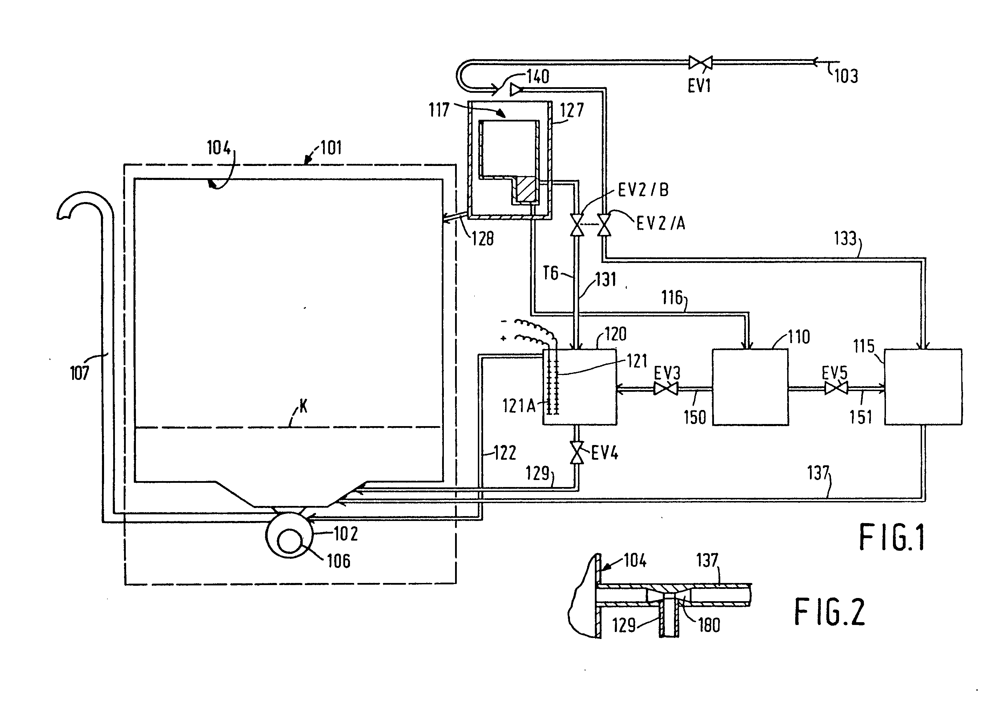

In Figure 1 the reference numeral 101 indicates generally the housing of a dishwashing machine, which defines a conventional washing space 104 closed by a door, not shown. The bottom of the washing space is conventionally connected to a discharge pipe 107 by way of a filter 102 and drainage pump 106.

Arranged inside the housing 101, but shown outside the housing for reasons of clarity, are: a water reservoir 117 which is disposed in a collection receptacle 127 connected at its bottom to the washing space 104 by a connection 128; an electrochemical cell 120 provided with electrodes 121, 121A which can be connected to a direct-current electricity source; a container 110 for the salt (NaCl); a container 115 containing an ion-exchange resin, the purpose of which is to soften the water used in at least one of the wash-programme stages; and a timer, not shown, for controlling the various wash-programme stages.

At its bottom the water reservoir 117 is in permanent communication through a conduit 116 with the salt container 110, which is disposed at a lower level than the water reservoir. In addition, at a predetermined height above its bottom, the reservoir 117 is connected to the electrochemical cell 120 by an overflow conduit 131 in which is incorporated a solenoid valve EV2/B controlled by the timer. The cell 120 also is disposed at a lower level than the water reservoir 117.

At a predetermined height above its bottom, the cell 120 is connected to the filter 102 by an overflow conduit 122. The cell 120 is also connected to the salt container 110 by a conduit 150 in which is incorporated a solenoid valve EV3 controlled by the timer. The container 110 is also connected to the ion-exchange resin container 115 by a conduit 151 in which is incorporated a solenoid valve EV5 controlled by the timer. The container 115 is connected at its bottom to the washing space 104 by a conduit 137 and at its top to the water main 103 by a conduit 133 in which the following are arranged in succession in the downstream direction: a solenoid valve EV1 controlled by the timer; an air gap 140 situated directly above the water reservoir 117, and a solenoid valve EV2/A controlled by the timer.

The electrochemical cell 120 is connected at its bottom by a conduit 29 to an ejector 180 incorporated in the conduit 137, whereby the conduit 129 opens into the ejector throat. In the conduit 129 a solenoid valve EV4 is incorporated controlled by the timer.

The operation is as follows. At the commencement of the wash cycle, the washing space 104, the cell 120 (which is usually positioned above the highest level K in the washing space 104) and the reservoir 117 are open. NaCl, various calcium salts and other substances are present in the resin container 115. The timer opens only the solenoid valves EV1 and EV2/A, all the others remaining closed, and starts the drainage pump 106. The mains water is drawn through the container 115, washes the resins contained therein and is discharged through the pipe 107.

The timer stops the pump 106 after a given time when discharge is complete. On termination of this first stage, the timer keeps the solenoid valve EV1 open, closes valve EV2/A, opens valve EV2/B and keeps valves EV3, EV4 and EV5 closed. The mains water, fed through valve EV1, cannot pass through valve EV2/A (which is closed) and therefore falls from the air gap into the reservoir 117, which starts to fill up. When the water level in the reservoir 117 reaches the height of the overflow conduit 131 the water, which continues to flow into the reservoir since valve EV1 is still open, discharges through the valve EV2/B into the cell 120. When the water reaches the inlet of the overflow conduit 122 it flows through this conduit to the bottom of the washing space 104 and effects a certain cleaning of the water filters 102. After a predetermined time, the timer closes valve EV1 and starts the drainage pump 106 in order to discharge all the water. In the meantime, the water level in the reservoir 117 stabilises at the level of the inlet to the overflow conduit 131. The timer then stops the pump 106.

The timer then opens the solenoid valves EV2/A and EV3 and keeps the solenoid valves EV1, EV2/B, EV4 and EV5 closed. Water flows from the bottom of the reservoir 117 along the conduit 116 and enters the salt container 110 to cause the brine therein to enter the cell 120 through the valve EV3. This thus effects automatic dispensing of the brine to be electrolysed in the cell 120. When dispensing is complete, the timer closes the valve EV3 and supplies electricity to the electrodes of the cell 120, which then begins to produce the sodium hypochlorite by electrolysis. The dishes are then washed in the conventional manner, if desired after a prewash with cold water. The wash water is fed to the washing space 104 through the valve EV1 (which is open in this stage), the air gap 140, the conduit 133, the valve EV2/A (now open), the resin container 115 (where it is softened) and the conduit 137. Some of the water falls from the air gap 140 into the reservoir 117, which is filled to the top. Water does not flow from the conduit 131 because the timer keeps the valve EV2/B closed. The excess water falls from the reservoir 117 directly into the washing environment 104 *via* the receptacle 127 and the connection 128 (which can be a simple aperture).

When electrolysis is finished, the timer disconnects the direct-current supply from the electrodes 121 of the cell 120.

The sodium hypochlorite is transported to the washing space 104 when the timer opens the valve EV4. The water flowing through the conduct 37 and the ejector 180 creates a suction through which now the sodium hypochlorite is drawn from the electrochemical cell 120.

Thus, when the valve EV4 is opened, a premixing takes place between the water arriving from the resin container 115 by way of the conduit 137 and the sodium hypochlorite arriving from the cell 120 by way of the valve EV4 and conduit 129. This mixture then enters the washing space 104.

This construction has the advantage that the cell 120 can be positioned below the washing space 104, i.e., in a zone which creates fewer constructional problems, in particular if the present invention is used on an existing dishwashing machine. The rinsing stage or stages which follow the use of the sodium hypochlorite are carried out in an entirely conventional manner. The last stage of the dishwashing cycle consists of regenerating the resins contained in 115. For this, the timer keeps all the solenoid valves closed except valve EV5. Consequently, the reservoir 117 empties of water, which is discharged through the conduit 116 and into the salt container 110 to cause the brine therein to enter the resin container 115 through the valve EV5 and conduit 151. The water which occupied the container 115 is thus transferred to the washing space 104 along the conduit 137. After a certain time the timer operates the pump 106 in order to empty the machine.

## Claim

An automatic dishwashing machine for domestic use comprising a washing space (104), a water reservoir (117) connectable to a water supply (103) by way of an air gap (140), a container (110) for sodium chloride, a cell (120) for the electrochemical production of sodium hypochlorite and an ion-exchanger (115) for softening the water, the ion exchanger (115) being hydraulically connected to the water supply by a conduct (133) containing the air gap (140) and a valve (EV 2A) located downstream of the air gap (140), the cell (120) being hydraulically connected to the water reservoir (117) via the container (110), whereby the water reservoir (117) is in permanent communication with the container (110) and the cell (120) is hydraulically connected to the washing space (104), characterized in that, the electrochemical cell (120) is also connected to the water reservoir (117) by a further hydraulic connection (131) through which the cell (120) can be filled with water to a predetermined level which is determined by level-determining means (122) and said further hydraulic connection (13) is controlled by valve means (EV 2/B), whereas the electrochemical cell (120) is hydraulically connected to the washing space (104) by way of an ejector (180), of which the drive fluid is constituted by water from the water supply (103) which has passed through the ion-exchanger (115).

## Patentanspruch

Automatische Haushalts-Geschirrspülmaschine mit einem Spülraum (104), einem Wasserbehälter (117), der mittels eines Luftspaltes (140) mit einer Wasserzufuhr (103) verbindbar ist, einem Behälter (110) für Natriumchlorid, einer Zelle (120) zur elektrochemischen Erzeugung von Natrium-Hypochlorit in einem Ionenaustascher (115) zum

Enthärten des Wassers, wobei der Ionenaustauscher (115) durch eine Leitung (133) mit dem Luftspalt (140) und einem stromabwärts von dem Luftspalt (140) liegenden Ventil (EV 2A) mit der Wasserzufuhr hydraulisch verbunden ist, wobei die Zelle (120) über den Behälter (110) mit dem Wasserbehälter hydraulisch verbunden ist, wodurch der Wasserbehälter (117) in ständiger Verbindung mit dem Behälter (110) steht und wobei die Zelle (120) mit dem Spülraum (104) hydraulisch verbunden ist, dadurch gekennzeichnet, daß die elektrochemische Zelle (120) ebenfalls durch eine weitere hydraulische Verbindung (131) mit dem Wasserbehälter (117) verbunden ist, wobei diese Zelle (120) durch die hydraulische Verbindung bis zu einem durch Pegelbestimmungsmittel (122) vorbestimmten Pegel mit Wasser gefüllt werden kann, und wobei die weitere hydraulische Verbindung (13) durch Ventilmittel (EV 2/B) geregelt wird, während die elektrochemische Zelle (120) mittels eines Ejektors (180) mit dem Spülraum (104) hydraulisch verbunden ist, wobei die Antriebsflüssigkeit des Ejektors durch das durch den Ionenaustauscher (115) hindurchgegangene Wasser von der Wasserleitung (103) gebildet wird.

**Revendication**

Lave-vaisselle automatique électroménager comportant un espace de lavage (104), un réservoir d'eau (117) pouvant être relié à une prise d'eau (103) au moyen d'une fente d'aération (140), un réservoir (110) pour le chlorure de sodium, une cellule (120) pour la production électrochimique d'hypochlorite de sodium et un échangeur d'ions (115) pour adoucir l'eau, l'échangeur d'ions (115) étant reli par voie hydraulique à la prise d'eau par un conduit (133) contenant l'entrefer (140) et une soupape (EV 2A) située en aval de la fente d'aération (140), la cellule (120) étant reliée par voie hydraulique au réservoir d'eau (117) à travers le réservoir (110), de sorte que le réservoir d'eau (117) communique de façon permanente avec le réservoir (110) et que la cellule (120) est reliée par voie hydraulique à l'espace de lavage (104), caractérisé en ce que la cellule électrochimique (120) est également reliée au réservoir d'eau (117) par une autre liaison hydraulique (131) par laquelle la cellule (120) peut être remplie d'eau jusqu'à un niveau prédéterminé, déterminé par des moyens (122) de détermination du niveau et en ce que ladite autre liaison hydraulique (13) est contrôlée par des moyens à soupape (EV2/B), tandis que la cellule électrochimique (120) est reliée par voie hydraulique à l'espace de lavage (104) au moyen d'un éjecteur (180) dont le fluide de commande est constitué par de l'eau provenant de la prise d'eau (103) et ayant traversée l'échangeur d'ions (115).

FIG.1

FIG.2

EP 0 152 154 B1